# EUROPEAN PATENT APPLICATION

(11) **EP 4 697 626 A1**
(43) Date of publication of application: **18.02.2026**
(21) Application number: 25193317.2
(22) Date of filing: 01.08.2025
(51) Int. Cl.: H04B 10/80, G02B 6/38, G02B 6/42

(54) **VEHICLE-MOUNTED SIGNAL TRANSMISSION SYSTEM**

(30) Priority: 01.08.2024 US 202463678260 P
(71) Applicant: Acon Optics Communications Inc., New Taipai City 231 (TW)
(72) Inventor: CUI, Yang-Yang, New Taipei City 231 (TW); ZHANG, Rui, New Taipei City 231 (TW)
(74) Representative: Viering, Jentschura & Partner mbB Patent- und Rechtsanwälte

(57) **Abstract**

A vehicle-mounted signal transmission system includes a terminal (10), a first optical signal output unit (21), a power transmission unit (22), and a central controller (30). The first optical signal output unit (21) is connected to the terminal (10) and is configured to receive a first electrical signal (E11) from the terminal (10) and to convert the first electrical signal into an optical signal (E11). The power transmission unit (22) is electrically connected to the terminal (10). The central controller (30) is electrically connected to the first optical signal output unit (21) and the power transmission unit (22), and the central controller (30) is configured to receive the optical signal (L1) from the first optical signal output unit (21), convert the optical signal (L1) into a second electrical signal (E12), and supply a first power to the power (P1) transmission unit (22).

## Description

### FIELD OF THE INVENTION

The instant disclosure relates to a vehicle-mounted signal transmission system.

### BACKGROUND

Electronic devices are widely utilized in various fields. Take a vehicle as an example, the vehicle are equipped with various vehicle electronic devices so as to provide diverse functions for the user, while the activation and control of the vehicle electronic devices rely on the complicated signal transmission system. The more the number of the vehicle electronic devices, the more complicated the signal transmission system.

As known to the inventor, a vehicle electronic device is connected to a power supply through a connector to obtain electricity for operation and transmit electrical signals. As the electronic device offers increasingly diverse functions, the electronic device may possess higher and higher requirements on signal transmission speed and stability. However, as the signal transmission system for the electronic device becomes complicated, signal transmission merely through electrical signals is insufficient to meet the requirements. Consequently, such issue is to be addressed.

### SUMMARY OF THE INVENTION

In view of these, an embodiment of the instant disclosure provides a vehicle-mounted signal transmission system. The vehicle-mounted signal transmission system comprises a terminal, a first optical signal output unit, a power transmission unit, and a central controller. The first optical signal output unit is connected to the terminal, and the first optical signal output unit is configured to receive a first electrical signal from the terminal and convert the first electrical signal into an optical signal. The power transmission unit is electrically connected to the terminal. The central controller is electrically connected to the first optical signal output unit and the power transmission unit, and the central controller is configured to receive the optical signal from the first optical signal output unit, convert the optical signal into a second electrical signal, and supply a first power to the power transmission unit.

In some embodiments, the vehicle-mounted signal transmission system further comprises a second optical signal receiving unit and a power control module. The second optical signal receiving unit and the power control module are electrically connected to the central controller, the second optical signal receiving unit receives the optical signal from the first optical signal output unit and converts the optical signal into the second electrical signal, and the power control module supplies the first power to the power transmission unit.

**In** some embodiments, the vehicle-mounted signal transmission system further comprises a second optical signal output unit and a first optical signal receiving unit. The second optical signal output unit is electrically connected to the central controller, and the first optical signal receiving unit is electrically connected to the terminal. The second optical signal output unit receives a first electrical control signal from the central controller and converts the first electrical control signal into an optical control signal, and the first optical signal receiving unit receives the optical control signal, converts the optical control signal into a second electrical control signal, and transmits the second electrical control signal to the terminal.

**In** some embodiments, the vehicle-mounted signal transmission system further comprises a region control module electrically connected to the central controller, the first optical signal receiving unit, and the power transmission unit. The region control module has a beam splitter configured to receive the optical control signal from the second optical signal output unit, perform beam splitting to form a control-end beam-split signal, and transmit the control-end beam-split signal to the first optical signal receiving unit.

**In** some embodiments, the region control module further comprises a power module, and the power module is electrically connected to the central controller and the power transmission unit to supply a second power.

In some embodiments, the vehicle-mounted signal transmission system further comprises a control-side adapter module electrically connected to the central controller and the region control module. The control-side adapter module is configured to receive the optical control signal and the first power from the central controller and transmit the optical control signal to the beam splitter.

In some embodiments, the vehicle-mounted signal transmission system further comprises a first intermediate adapter module electrically connected to the control-side adapter module and the central controller. The first intermediate adapter module is configured to receive the optical control signal and the first power from the central controller and transmit the optical control signal and the first power to the control-side adapter module.

In some embodiments, the control-side adapter module comprises a control-side region control-end adapter, a control-side first-end connector, and a control-side second-end connector. The control-side first-end connector and the control-side second-end connector are electrically connected to the control-side region control-end adapter, respectively. The control-side second-end connector is electrically connected to the central controller and is configured to receive the optical control signal and the first power from the central controller. The control-side first-end connector is electrically connected to the region control module and is configured to transmit the optical control signal to the beam splitter.

In some embodiments, the vehicle-mounted signal transmission system further comprises a terminal-side adapter module electrically connected to the beam splitter of the region control module, the first optical signal receiving unit, and the power transmission unit. The terminal-side adapter module is configured to receive the control-end beam-split signal from the beam splitter and to receive the second power from the power module.

In some embodiments, the vehicle-mounted signal transmission system further comprises a second intermediate adapter module electrically connected to the terminal-side adapter module, the first optical signal receiving unit, and the power transmission unit. The second intermediate adapter module is configured to receive the control-end beam-split signal from the terminal-side adapter module and transmit the control-end beam-split signal to the first optical signal receiving unit, and the second intermediate adapter module is configured to receive the second power from the terminal-side adapter module and transmit the second power to the power transmission unit.

In some embodiments, the terminal-side adapter module comprises a terminal-side region control-end adapter, a terminal-side first-end connector, and a terminal-side second-end connector. The terminal-side first-end connector and the terminal-side second-end connector are connected to the terminal-side region control-end adapter, respectively. The terminal-side second-end connector is electrically connected to the beam splitter and is configured to receive the control-end beam-split signal from the beam splitter and receive the second power from the power module. The terminal-side second-end connector transmits the control-end beam-split signal to the first optical signal receiving unit and transmits the second power to the power transmission unit through the terminal-side first-end connector.

### BRIEF DESCRIPTION OF THE DRAWINGS

The instant disclosure will become more fully understood from the detailed description given herein below for illustration only, and thus not limitative of the instant disclosure, wherein:
Fig. 1 illustrates a schematic view showing a vehicle-mounted signal transmission system applied in a vehicle, according to an exemplary embodiment of the instant disclosure;
Fig. 2 illustrates a block diagram of a vehicle-mounted signal transmission system according to a first embodiment of the instant disclosure;
Fig. 3 illustrates a block diagram of a vehicle-mounted signal transmission system according to a second embodiment of the instant disclosure;
Fig. 4 illustrates a block diagram of a vehicle-mounted signal transmission system according to a third embodiment of the instant disclosure;
Fig. 5 illustrates a schematic view showing a vehicle-mounted signal transmission system applied in a vehicle, according to another exemplary embodiment of the instant disclosure;
Fig. 6 illustrates a perspective view of the vehicle-mounted signal transmission system of another exemplary embodiment of the instant disclosure;
Fig. 7 illustrates a block diagram of a vehicle-mounted signal transmission system according to a fourth embodiment of the instant disclosure;
Fig. 8 illustrates a block diagram of a vehicle-mounted signal transmission system according to a fifth embodiment of the instant disclosure; and
Fig. 9 illustrates a block diagram of a vehicle-mounted signal transmission system according to a sixth embodiment of the instant disclosure.

### DETAILED DESCRIPTION

Before the instant disclosure is described in detail in various embodiments, it should be noted that in the following description, the drawings are merely for schematic illustration, which are not necessarily drawn to scale, and not all details are necessarily shown in the drawings.

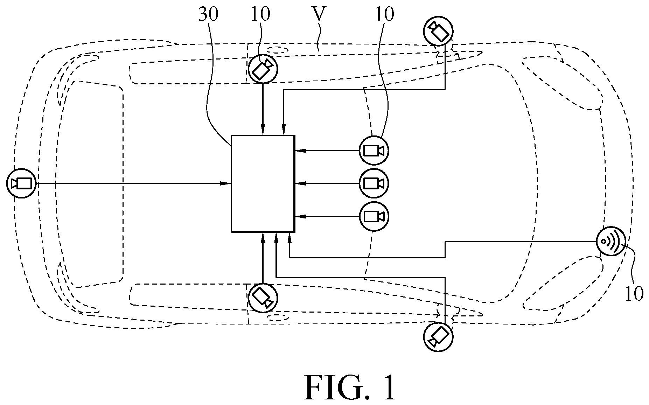

Please refer to Fig. 1. Fig. 1 illustrates a schematic view showing a vehicle-mounted signal transmission system applied in a vehicle, according to an exemplary embodiment of the instant disclosure. The vehicle-mounted signal transmission system is configured to be applied in a vehicle V. The vehicle V has a central controller 30 and a terminal 10, the central controller 30 is signally connected to the terminal 10 to conduct centralized processing on detection data and decisions of the terminal 10, control behaviors of the vehicle V, and unify communications and coordination among various regions of the vehicle V.

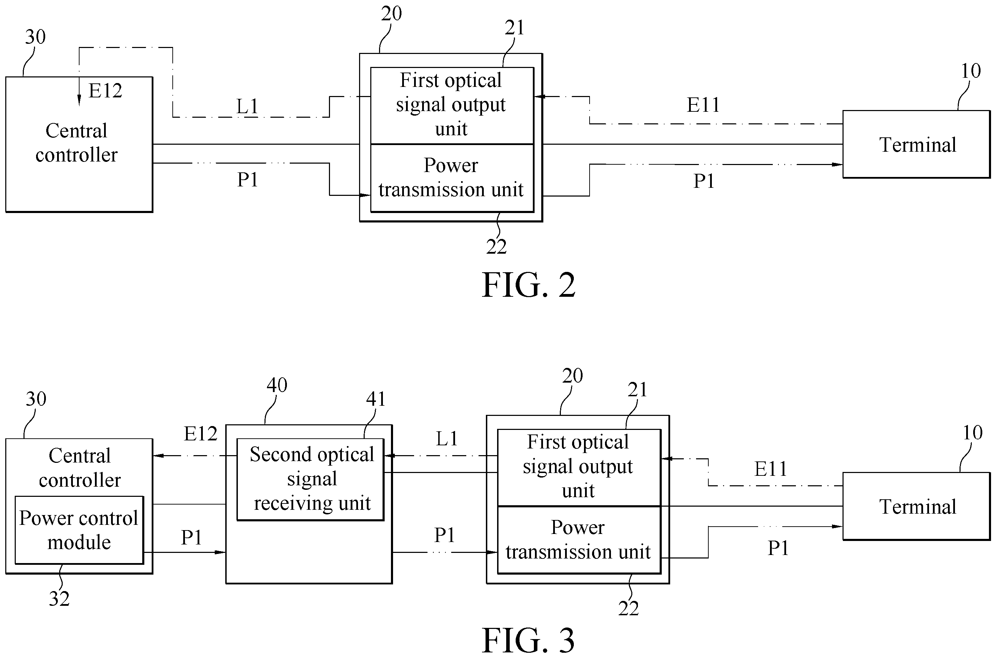

Please refer to Fig. 1 and Fig. 2. The vehicle-mounted signal transmission system comprises a terminal 10, a first optical signal output unit 21, a power transmission unit 22, and a central controller 30. The first optical signal output unit 21 is connected to the terminal 10, and the first optical signal output unit 21 is configured to receive a first electrical signal E11 from the terminal 10 and convert the first electrical signal E11 into an optical signal L1. The power transmission unit 22 is electrically connected to the terminal 10. The central controller 30 is connected to the first optical signal output unit 21 and is electrically connected to the power transmission unit 22. The central controller 30 is configured to receive the optical signal L1 from the first optical signal output unit 21, convert the optical signal L1 into a second electrical signal E12, and supply a first power P1 to the power transmission unit 22.

Accordingly, in one or some embodiments, the power required for the terminal 10 can be obtained from the power transmission unit 22 independently, while signals of the terminal 10 can be transmitted to the central controller 30 in the form of optical signals through the first optical signal output unit 21. Hence, the signal transmission speed and stability of the terminal 10 can be enhanced.

In some embodiments, the terminal 10 may be a detection terminal, such as a vehicle camera or a radar. The terminal 10 configured as a vehicle camera collects image information and provides the image information for the central controller 30 to be displayed or to control an automated driving system (ADS) or a driver monitoring system (DMS) in the vehicle V according to the image information. In this embodiment, after the terminal 10 collects the image information, a first electrical signal E11 can be generated.

The first optical signal output unit 21 is configured to output signals from the terminal 10 in the form of optical signals. In some embodiments, the first optical signal output unit 21 is a transmitter optical sub-assembly (TOSA). In this embodiment, the first optical signal output unit 21 receives the first electrical signal E11 from the terminal 10, converts the first electrical signal E11 into the optical signal L1, and transmits the optical signal L1 out.

The power transmission unit 22 is configured to supply the power required by the terminal 10 to the terminal 10. In some embodiments, the power transmission unit 22 may be conductive terminal(s).

The central controller 30 conducts processing and controlling procedures according to the image information collected by the terminal 10. In some embodiments, the central controller 30 is configured to process signals in the form of electrical signals. Therefore, after the central controller 30 receives the optical signal L1 in the form of optical signals, the central controller 30 firstly converts the optical signal L1 into the second electrical signal E12, and then the central controller 30 processes the second electrical signal E12. Specifically, in some embodiments, the central controller 30 may be but not limited to display the image information collected by the terminal 10 on a vehicle-mounted display according to the second electrical signal E12 or control the driving behaviors of the vehicle V according to the second electrical signal E12. It is noted that, the first electrical signal E11 and the second electrical signal E12 are substantially identical signals, with the first electrical signal E11 being converted to an optical signal and then back to an electrical signal to form the second electrical signal E12.

As above, the electrical signals generated by the terminal 10 are converted into the optical signals for transmission. Therefore, signals can be transmitted through optical fibers, thereby increasing the signal transmission speed and thus further enhancing the response speed of the central controller 30.

In some embodiments, the first optical signal output unit 21 and the power transmission unit 22 may be integrated in a first signal transmission component 20 connected to the terminal 10. In some embodiments, the hardware architecture of the first signal transmission component 20 may comprise a first signal transmission component adapter A1 and a first signal transmission component connector C1. The first signal transmission component adapter A1 is connected to the terminal 10, and the first signal transmission component connector C1 is connected to the first signal transmission component adapter A1 and the central controller 30.

Please refer to Fig. 3. In some embodiments, the central controller 30 comprises a processing unit and a power control module 32 electrically connected to each other. The processing unit conducts processing and controlling procedures according to the received signals, and the power control module 32 operates in cooperation with the processing unit to conduct power management and control. Specifically, in this embodiment, the power control unit 32 is an electronic control unit (ECU).

Please refer to Fig. 3. In some embodiments, the vehicle-mounted signal transmission system further comprises a second optical signal receiving unit 41. The second optical signal receiving unit 41 is connected to the central controller 30 and is configured to receive signals in the form of optical signals, convert the signals in the form of optical signals into signals in the form of electrical signals, and then transmit the signals in the form of electrical signals to the central controller 30.

Please refer to Fig. 3. In some embodiments, the second optical signal receiving unit 41 is a receiver optical sub-assembly (ROSA) and is configured to receive signals in the form of optical signals from the terminal 10. In this embodiment, the second optical signal receiving unit 41 receives the optical signal L1 from the terminal 10, converts the optical signal L1 into the second electrical signal E12, and transmits the second electrical signal E12 to the central controller 30.

In some embodiments, the second optical signal output unit 41 may be integrated in a second signal transmission component 40 connected to the central controller 30. In some embodiments, the hardware architecture of the second signal transmission component 40 may comprise a second signal transmission component adapter A2 and a second signal transmission component connector C2. The second signal transmission component adapter A2 is connected to the central controller 30, and the second signal transmission component connector C2 is connected to the second signal transmission component adapter A2 and the terminal 10.

As above, in some embodiments where the first optical signal output unit 21 is a TOSA and the second optical signal receiving unit 41 is a ROSA, the vehicle-mounted signal transmission system at least can provide a unidirectional transmission from the terminal 10 to the central controller 30.

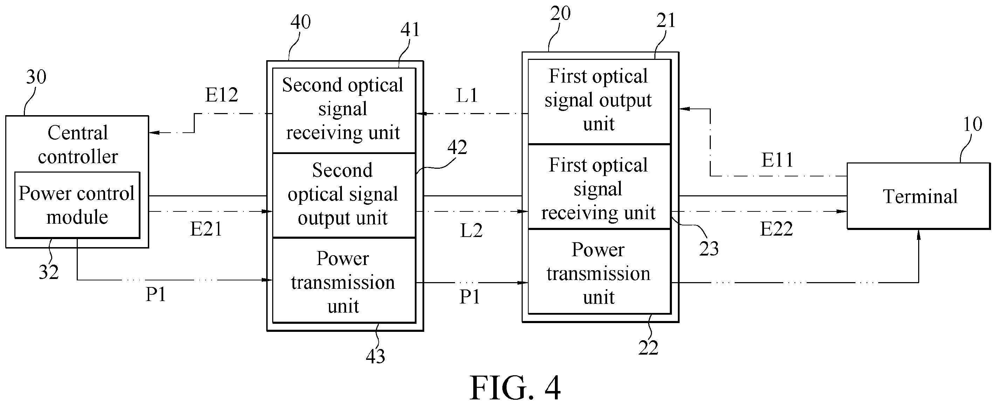

Please refer to Fig. 4. In some embodiments, the vehicle-mounted signal transmission system further comprises a first optical signal receiving unit 23 and a second optical signal output unit 42. The first optical signal receiving unit 23 is connected to the terminal 10, and the second optical signal output unit 42 is connected to the central controller 30. The second optical signal output unit 42 receives a first electrical control signal E21 from the central controller 30 and converts the first electrical control signal E21 into an optical control signal L2. The first optical signal receiving unit 23 receives the optical control signal L2, converts the optical control signal L2 into a second electrical control signal E33, and transmits the second electrical control signal E33 to the terminal 10. Accordingly, the central controller 30 can transmit control signals to the terminal 10 to control the terminal 10, so that bi-directional signal transmission can be achieved.

Specifically, in some embodiments, the first optical signal receiving unit 23 is integrated in the first signal transmission component 20. Therefore, the integration of the first optical signal output unit 21 and the first optical signal receiving unit 23 allows the first signal transmission component 20 to possess outputting and receiving function for optical signals and thus become a bi-directional optical sub-assembly. In these embodiments, the first signal transmission component 20 further comprises wavelength division multiplexing filters. Therefore, through demultiplexing or multiplexing procedures conducted by the wavelength division multiplexing filters, signal outputting and receiving can be implemented at the same time within a single optical fiber.

Please refer to Fig. 4. In some embodiments, the second optical signal output unit 42 is integrated in the second signal transmission component 40. Therefore, the integration of the second optical signal receiving unit 41 and the second optical signal output unit 42 allows the second signal transmission component 40 to possess outputting and receiving function for optical signals and thus become a bi-directional optical sub-assembly. In these embodiments, the second signal transmission component 40 further comprises wavelength division multiplexing filters. Therefore, through demultiplexing or multiplexing procedures conducted by the wavelength division multiplexing filters, signal outputting and receiving can be implemented at the same time within a single optical fiber.

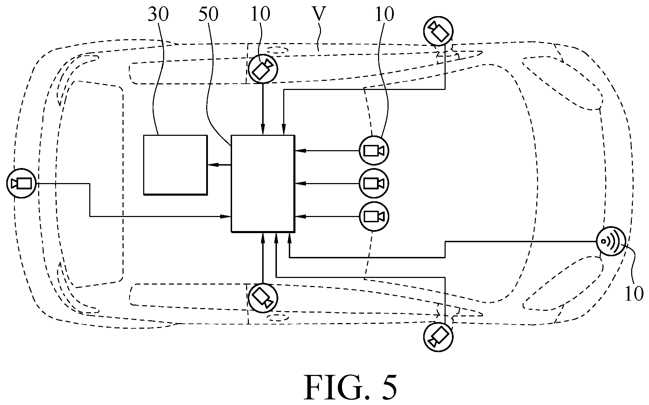

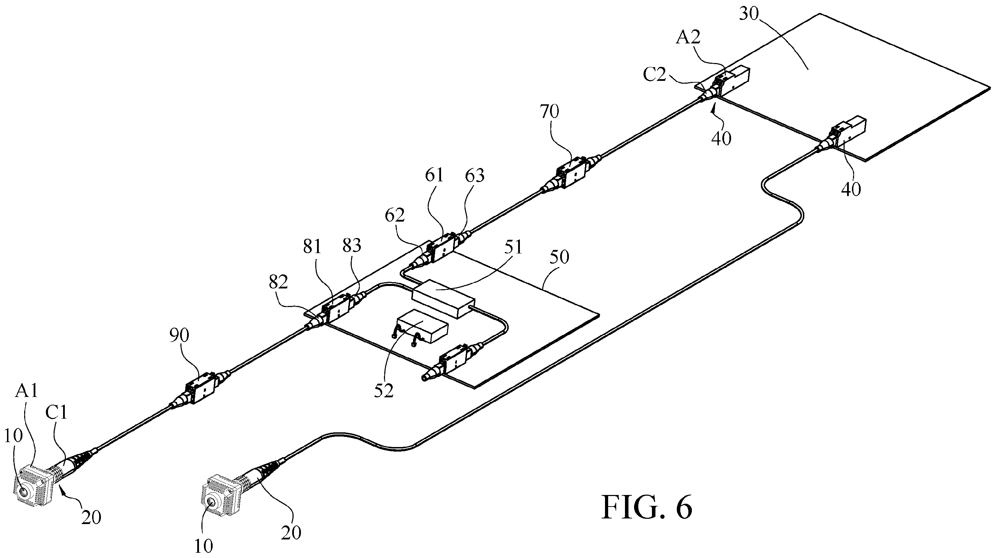

Please refer to Fig. 5 to Fig. 7. In some embodiments, the vehicle-mounted signal transmission system further comprises a region control module 50 connected between the central controller 30 and the terminal 10. Specifically, in some embodiments, the region control module 50 is connected to the terminal 10 through the first signal transmission component 20, and the region control module 50 is connected to the central controller 30 through the second signal transmission component 40. In some embodiments, the second signal transmission component 40 further comprises a power transmission unit 43, the power transmission unit 43 of the second signal transmission component 40 can transmit the power between the central controller 30 and the region control module 50 or transmit the power between the central controller 30 and the first signal transmission component 20.

The number of the region control module 50 may be one or plural; the vehicle V may be divided into a plurality of control regions according to the space or function of the vehicle body, each of the regions corresponds to a corresponding one of the region control modules 50, and the central controller 30 conducts zonal control for the terminals 10 in various control regions through the region control modules 50. **In** the embodiments where the control regions are divided according to the space of the vehicle body, the vehicle V may be divided into a front cabin control region, a rear cabin control region, and a central control region. The front cabin control region may be but not limited to integrate window raising/lowering, rearview mirror adjustment, door lock sensors, and blind spot radar; the rear cabin control region may be but not limited to integrate tail lights, power tailgate, backup camera, and rear radar; and the central control region may be but not limited to integrate power control and safety control. Through the configuration of the region control module 50, the number of wiring harnesses is simplified, zonal security is enhanced, and maintenance convenience is improved.

As shown in Fig. 5 to Fig. 7, in some embodiments, the number of the region control module 50 is illustratively exemplified as one, but the instant disclosure is not limited thereto. **In** these embodiments, the central controller 30 controls the terminal 10 in the configuration of a vehicle camera and the terminal 10 in the configuration of a radar through the region control modules 50. **In** this embodiment, each of the terminals 10 is connected to a corresponding one of the first signal transmission components 20, and the first signal transmission component 20 may be connected to the region control module 50 or directly connected to the central controller 30.

Specifically, in this embodiment, the region control module 50 is electrically connected to the central controller 30 and the first optical signal receiving unit 23 and the power transmission unit 22 of the first signal transmission component 20. The region control module 50 has a beam splitter 51 configured to receive the optical control signal L2 from the second optical signal output unit 42, perform beam splitting to form a control-end beam-split signal L21, and transmit the control-end beam-split signal L21 to the first optical signal receiving unit 23.

Accordingly, in one or some embodiments, when the central controller 30 tends to transmit control signals to the terminal 10 through the region control module 50, the central controller 30 transmits the first electrical control signal E21 to the second optical signal output unit 42, the second optical signal output unit 42 converts the first electrical control signal E21 into the optical control signal L2 and transmits the optical control signal L2 to the region control module 50. Then, the beam splitter 51 of the region control module 50 receives the optical control signal L2, perform beam splitting to form the control-end beam-split signal L21, and transmit the control-end beam-split signal L21 to the first optical signal receiving unit 23 connected to the terminal 10. Then, after the first optical signal receiving unit 23 receives the control-end beam-split signal L21, the first optical signal receiving unit 23 converts the control-end beam-split signal L21 into the second electrical control signal E22 and transmits the second electrical control signal E22 to the terminal 10, and the terminal 10 is controlled by the central controller 30 according to the second electrical control signal E22. In this embodiment, the beam splitter 51 of the region control module 50 determines the number of the control-end beam-split signal L21 according to the number of the terminal 10; for example, if the number of the terminal 10 is two, the beam splitter 51 performs beam splitting to form two control-end beam-split signals L21 to the two terminals 10, respectively. Moreover, the number of the first signal transmission component 20 corresponds to the number of the terminal 10; that is, in this embodiment, each of the terminals 10 is connected to a corresponding one of the first signal transmission components 20. It is noted that, the first electrical control signal E21 and the second electrical control signal E22 are substantially identical signals, with the first electrical control signal E21 being converted to an optical signal and then back to an electrical signal to form the second electrical control signal E22.

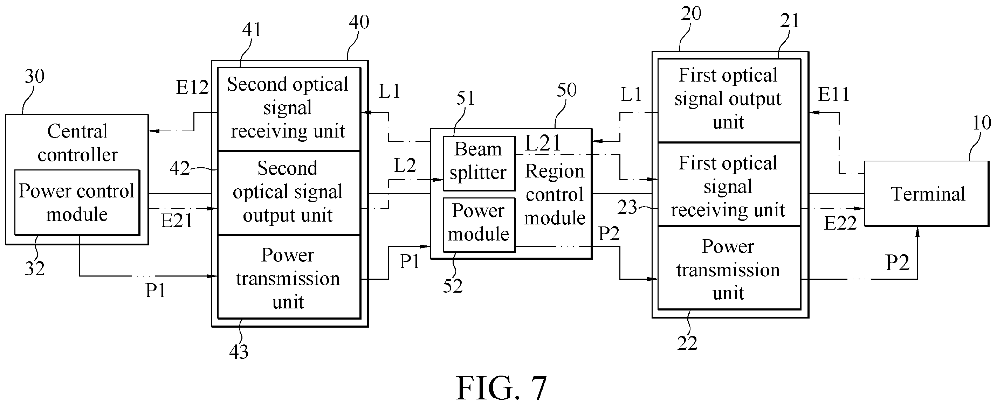

Please refer to Fig. 7. In some embodiments where the vehicle-mounted signal transmission system comprises the region control module 50, the region control module 50 further comprises a power module 52 electrically connected to the central controller 30 and the power transmission unit 22 to supply a second power P2. In these embodiments, the power transmission unit 22 of the first signal transmission component 20 is electrically connected to the region control module 50, the power transmission unit 22 obtains the power required for the terminal 10 (in this embodiment, the second power P2) from the power module 52 of the region control module 50. Based on the above, it is noted that, in the embodiments where the vehicle-mounted signal transmission system comprises the region control module 50, the central controller 30 just needs to transmit the control signals or the power to the region control modules 50, and the control signals or the power can be respectively transmitted to the terminals 10 through the region control modules 50. Therefore, the layouts of the wiring harnesses between the central controller 30 and the region control module 50 can be properly simplified, so that the number and weight of the wiring harnesses can be reduced, and the maintenance convenience can be improved.

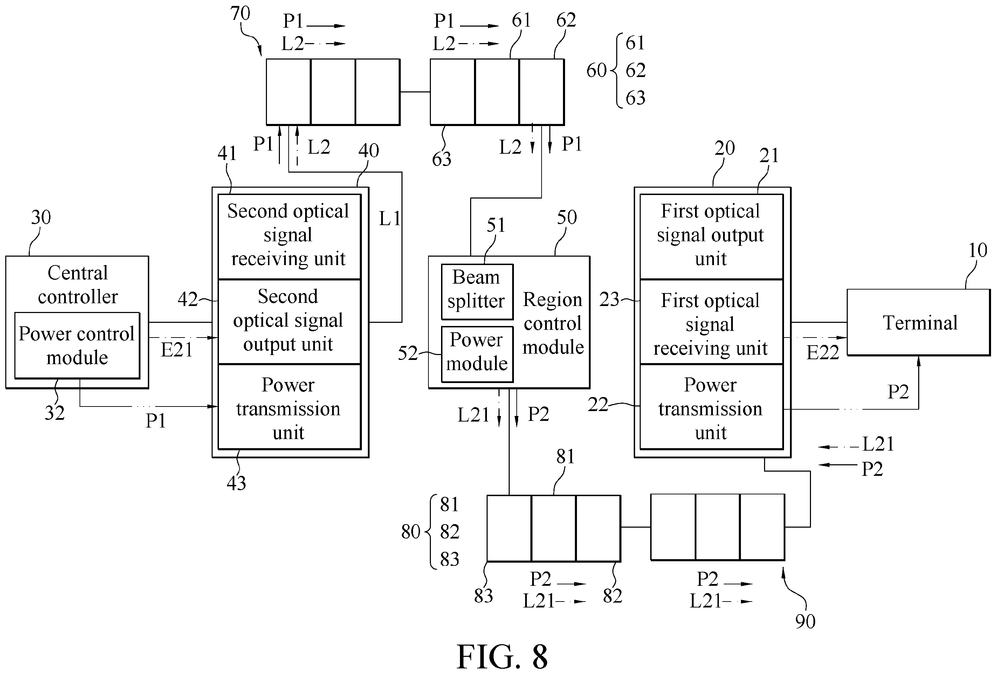

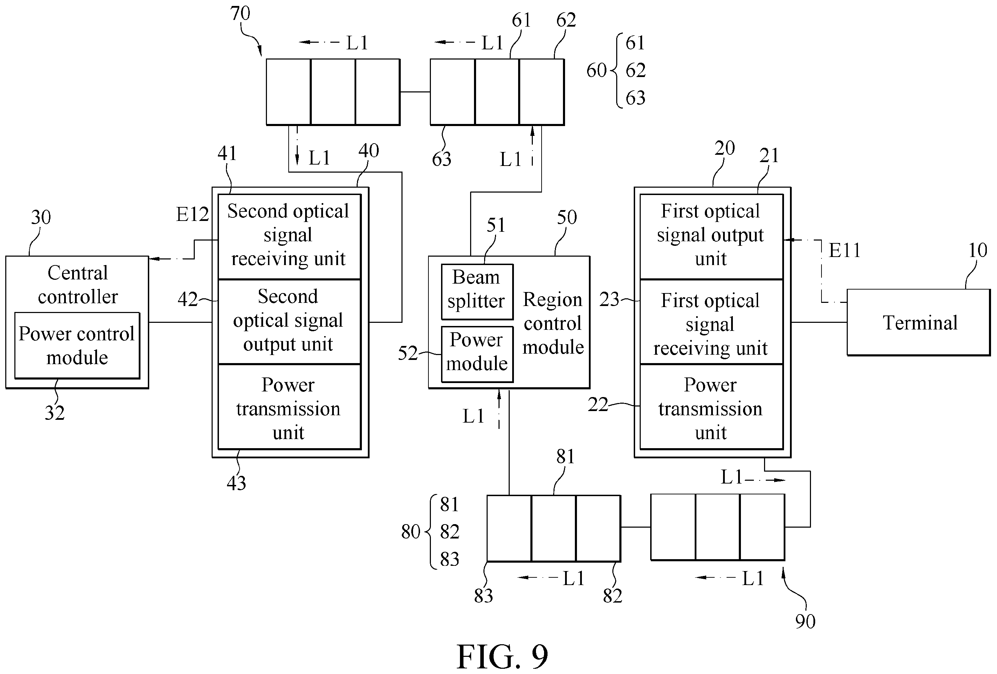

Please refer to Fig. 8 and Fig. 9. In some embodiments, the vehicle-mounted signal transmission system further comprises a control-side adapter module 60 electrically connected to the central controller 30 and the region control module 50. The control-side adapter module 60 is configured to receive the optical control signal L2 and the first power P1 from the central controller 30, and the control-side adapter module 60 is configured to transmit the optical control signal L2 to the beam splitter 51 of the region control module 50. The control-side adapter module 60 comprises a control-side region control-end adapter 61, a control-side first-end connector 62, and a control-side second-end connector 63. The control-side first-end connector 62 and the control-side second-end connector 63 are electrically connected to the control-side region control-end adapter 61, respectively. The control-side second-end connector 63 is electrically connected to the central controller 30 and is configured to receive the optical control signal L2 and the first power P1 from the central controller 30. The control-side first-end connector 62 is connected to the region control module 50 and is configured to transmit the optical control signal L2 to the beam splitter 51 of the region control module 50. In this embodiment, the central controller 30 is electrically connected to the region control module 50; the power module 52 of the region control module 50 may obtain the first power P1 supplied from the power control module 32 of the central controller 30 and output as the second power P2 or may obtain the second power P2 through the main power of the vehicle V by being electrically connected to the vehicle V, and the instant disclosure is not limited thereto.

Accordingly, the control-side adapter module 60 can transmit the optical control signal L2 and the first power P1 from the central controller 30 to the region control module 50. Hence, the control-side first-end connector 62 and the control-side second-end connector 63 can be respectively connected to the region control module 50 and the central controller 30, thereby facilitating the assembling and the maintenance of the system.

In some embodiments, the vehicle-mounted signal transmission system further comprises a first intermediate adapter module 70 electrically connected to the control-side adapter module 60 and the central controller 30. The first intermediate adapter module 70 is configured to receive the optical control signal L2 and the first power P1 from the central controller 30 and transmit the optical control signal L2 and the first power P1 to the control-side adapter module 60. Specifically, in some embodiments, the first intermediate adapter module 70 may be composed of an adapter and two connectors, one of the two connectors is connected to the central controller 30 and the adapter, and the other connector is connected to the adapter and the control-side second-end connector 63 of the control-side adapter module 60.

In some embodiments, the vehicle-mounted signal transmission system further comprises a terminal-side adapter module 80 electrically connected to the region control module 50 and the first signal transmission component 20. The terminal-side adapter module 80 is configured to receive the control-end beam-split signal L21 from the beam splitter 51 of the region control module 50 and receive the second power P2 from the power module 52 of the region control module 50. **In** these embodiments, the terminal-side adapter module 80 comprises a terminal-side region control-end adapter 81, a terminal-side first-end connector 82, and a terminal-side second-end connector 83. The terminal-side first-end connector 82 and the terminal-side second-end connector 83 are electrically connected to the terminal-side region control-end adapter 81, respectively. The terminal-side second-end connector 83 is electrically connected to the region control module 50, and the terminal-side second-end connector 83 is configured to receive the control-end beam-split signal L21 from the beam splitter 51 of the region control module 50 and to receive the second power P2 from the power module 52 of the region control module 50. The terminal-side second-end connector 83 transmits the control-end beam-split signal L21 to the first optical signal receiving unit 23 of the first signal transmission component 20 and transmits the second power P2 to the power transmission unit 22 of the first signal transmission component 20 through the terminal-side first-end connector 82. The first optical signal receiving unit 23 of the first signal transmission component 20 receives the control-end beam-split signal L21, converts the control-end beam-split signal L21 into the second electrical control signal E22, and transmits the second electrical control signal E22 to the terminal 10. The power transmission unit 22 transmits the second power P2 to the terminal 10.

**In** some embodiments, the vehicle-mounted signal transmission system further comprises a second intermediate adapter module 90 electrically connected to the terminal-side adapter module 80 and the first signal transmission component 20. The second intermediate adapter module 90 is configured to receive the control-end beam-split signal L21 from the terminal-side adapter module 80 and transmit the control-end beam-split signal L21 to the first optical signal receiving unit 23 of the first signal transmission component 20, and the second intermediate adapter module 90 is configured to receive the second power P2 from the terminal-side adapter module 80 and transmit the second power P2 to the power transmission unit 22 of the first signal transmission component 20. Specifically, in some embodiments, the second intermediate adapter module 90 may be composed of an adapter and two connectors, one of the two connectors is connected to the terminal 10 and the adapter, and the other connector is connected to the adapter and the terminal-side first-end connector 82 of the terminal-side adapter module 80.

Please refer to Fig. 9. In some embodiments where the vehicle-mounted signal transmission system comprises the control-side adapter module 60, the first intermediate adapter module 70, the terminal-side adapter module 80, and the second intermediate adapter module 90, the terminal 10 transmits the first electrical signal E11 to the first signal transmission component 20, the first optical signal output unit 21 of the first signal transmission component 20 converts the first electrical signal E11 into the optical signal L1 and outputs the optical signal L1, the optical signal L1 output by the first signal transmission component 20 is then transmitted sequentially through the second intermediate adapter module 90, the terminal-side adapter module 80, the region control module 50, the control-side adapter module 60, and the first intermediate adapter module 70 in the form of optical signals and eventually to the second signal transmission component 40. The second optical signal receiving unit 41 of the second signal transmission component 40 converts the optical signal L1 into the second electrical signal E12 and transmits the second electrical signal E12 to the central controller 30.

Accordingly, in one or some embodiments of the instant disclosure, through the configuration of the control-side adapter module 60, the first intermediate adapter module 70, the terminal-side adapter module 80, and the second intermediate adapter module 90, the number of the connection nodes between the central controller 30 and the terminal 10 is increased. Therefore, when some of the wiring harnesses or connectors are damaged, the damaged parts can be replaced conveniently, rather than replacing the whole wiring harnesses between the central controller 30 and the terminal 10. Hence, not only can the maintenance cost be reduced, but it is also more environmentally friendly. Moreover, because the number of the connection nodes between the central controller 30 and the terminal 10 is increased, upon performing maintenance on the wiring harnesses or connectors, the user does not need to remove the peripheral components of the vehicle V (such as the seat) in a large scale, thereby enhancing the convenience in the maintenance of the system.

## Claims

1. A vehicle-mounted signal transmission system, comprising:
a terminal (10);
a first optical signal output unit (21) connected to the terminal (10), wherein the first optical signal output unit (21) is configured to receive a first electrical signal (E11) and convert the first electrical signal (E11) into an optical signal (L1);
a power transmission unit (22) electrically connected to the terminal (10);
a central controller (30) electrically connected to the first optical signal output unit (21) and the power transmission unit (22), wherein the central controller (30) is configured to receive the optical signal (L1) from the first optical signal output unit (21) and convert the optical signal (L1) into a second electrical signal (E12), and the central controller (30) is configured to supply a first power (P1) to the power transmission unit (22).

2. The vehicle-mounted signal transmission system according to claim 1, further comprising a second optical signal receiving unit (41) and a power control module (32), wherein the second optical signal receiving unit (41) and the power control module (32) are electrically connected to the central controller (30), the second optical signal receiving unit (41) receives the optical signal (L1) from the first optical signal output unit (21) and converts the optical signal (L1) into the second electrical signal (E12), and the power control module (32) supplies the first power (P1) to the power transmission unit (22).

3. The vehicle-mounted signal transmission system according to claim 1, further comprising a second optical signal output unit (42) and a first optical signal receiving unit (23), wherein the second optical signal output unit (42) is connected to the central controller (30), the first optical signal receiving unit (23) is connected to the terminal (10), the second optical signal output unit (42) receives a first electrical control signal (E21) from the central controller (30) and converts the first electrical control signal (E21) into an optical control signal (L2), and the first optical signal receiving unit (23) receives the optical control signal (L2), converts the optical control signal (L2) into a second electrical control signal (E22), and transmits the second electrical control signal (E22) to the terminal (10).

4. The vehicle-mounted signal transmission system according to claim 3, further comprising a region control module (50) electrically connected to the central controller (30), the first optical signal receiving unit (23), and the power transmission unit (22), wherein the region control module (50) has a beam splitter (51) configured to receive the optical control signal (L2) from the second optical signal output unit (42), perform beam splitting to form a control-end beam-split signal (L21), and transmit the control-end beam-split signal (L21) to the first optical signal receiving unit (23).

5. The vehicle-mounted signal transmission system according to claim 4, wherein the region control module (50) further comprises a power module (52), and the power module (52) is electrically connected to the central controller (30) and the power transmission unit (22) to supply a second power (P2).

6. The vehicle-mounted signal transmission system according to claim 4, further comprising a control-side adapter module (60) electrically connected to the central controller (30) and the region control module (50), wherein the control-side adapter module (60) is configured to receive the optical control signal (L2) and the first power (P1) from the central controller (30) and transmit the optical control signal (L2) to the beam splitter (51).

7. The vehicle-mounted signal transmission system according to claim 6, further comprising a first intermediate adapter module (70) electrically connected to the control-side adapter module (60) and the central controller (30), wherein first intermediate adapter module (70) is configured to receive the optical control signal (L2) and the first power (P1) from the central controller (30) and transmit the optical control signal (L2) and the first power (P1) to the control-side adapter module (60).

8. The vehicle-mounted signal transmission system according to claim 6, wherein the control-side adapter module (60) comprises a control-side region control-end adapter (61), a control-side first-end connector (62), and a control-side second-end connector (63), the control-side first-end connector (62) and the control-side second-end connector (63) are electrically connected to the control-side region control-end adapter (61), respectively, the control-side second-end connector (63) is electrically connected to the central controller (30) and is configured to receive the optical control signal (L2) and the first power (P1) from the central controller (30), and the control-side first-end connector (62) is electrically connected to the region control module (50) and is configured to transmit the optical control signal (L2) to the beam splitter (51).

9. The vehicle-mounted signal transmission system according to claim 5, further comprising a terminal-side adapter module (80) electrically connected to the beam splitter (51) of the region control module (50), the first optical signal receiving unit (23), and the power transmission unit (22), wherein the terminal-side adapter module (80) is configured to receive the control-end beam-split signal (L21) from the beam splitter (51) and to receive the second power (P2) from the power module (52).

10. The vehicle-mounted signal transmission system according to claim 9, further comprising a second intermediate adapter module (90) electrically connected to the terminal-side adapter module (80), the first optical signal receiving unit (23), and the power transmission unit (22), wherein the second intermediate adapter module (90) is configured to receive the control-end beam-split signal (L21) from the terminal-side adapter module (80) and transmit the control-end beam-split signal (L21) to the first optical signal receiving unit (23), and the second intermediate adapter module (90) is configured to receive the second power (P2) from the terminal-side adapter module (80) and transmit the second power (P2) to the power transmission unit (22).

11. The vehicle-mounted signal transmission system according to claim 9, wherein the terminal-side adapter module (80) comprises a terminal-side region control-end adapter (81), a terminal-side first-end connector (82), and a terminal-side second-end connector (83), the terminal-side first-end connector (82) and the terminal-side second-end connector (83) are electrically connected to the terminal-side region control-end adapter (81), respectively, the terminal-side second-end connector (83) is electrically connected to the region control module (50) and is configured to receive the control-end beam-split signal (L21) from the beam splitter (51) and receive the second power (P2) from the power module (52), and the terminal-side second-end connector (83) transmits the control-end beam-split signal (L21) to the first optical signal receiving unit (23) and transmits the second power (P2) to the power transmission unit (22) through the terminal-side first-end connector (82).
